(19) **Europäisches Patentamt**
**European Patent Office**
**Office européen des brevets**

(11) **EP 2 842 765 B1**

(12) **EUROPEAN PATENT SPECIFICATION**

(45) Date of publication and mention
of the grant of the patent:
**11.04.2018 Bulletin 2018/15**

(21) Application number: **13780848.1**

(22) Date of filing: **24.04.2013**

(51) Int Cl.:
**B60C 9/18** *(2006.01)*    **B60C 9/22** *(2006.01)*
**B60C 9/30** *(2006.01)*    **B60C 3/04** *(2006.01)*
**B60C 9/20** *(2006.01)*    **B60C 9/28** *(2006.01)*

(86) International application number:
**PCT/JP2013/002794**

(87) International publication number:
**WO 2013/161296 (31.10.2013 Gazette 2013/44)**

(54) **PNEUMATIC TIRE**

LUFTREIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2012 JP 2012098928**

(43) Date of publication of application:
**04.03.2015 Bulletin 2015/10**

(73) Proprietor: **Bridgestone Corporation
Tokyo 104-8340 (JP)**

(72) Inventor: **KOZUKI, Kentaro
Kodaira-shi
Tokyo 187-8531 (JP)**

(74) Representative: **Oxley, Robin John George
Marks & Clerk LLP
90 Long Acre
London WC2E 9RA (GB)**

(56) References cited:
**EP-A2- 1 356 956        JP-A- H0 431 107
JP-A- H10 217 716       JP-A- H11 240 310
JP-A- H11 321 222       JP-A- 2001 253 208
JP-A- 2007 216 778      JP-A- 2008 087 567
US-A1- 2005 061 413**

Printed by Jouve, 75001 PARIS (FR)

**Description**

TECHNICAL FIELD

The present invention relates to a pneumatic tire having an improved noise performance while maintaining the steering stability performance and the rolling resistance performance.

BACKGROUND ART

Conventionally, in order to obtain both the steering stability performance and the rolling resistance performance, a pneumatic tire comprises a inclined belt layer of which cords are greatly inclined relative to the circumferential direction of the tire and a circumferential belt layer on the outside of the inclined belt in the radial direction of the tire (refer, for example, to Patent Document 1). However, it is known that the noise performance deteriorates when a pneumatic tire is provided with such inclined belt layer.

As for the noise performance, there has been proposed a pneumatic tire which comprises high elastic fiber cords at both end regions of a circumferential belt layer for enhancing the circumferential rigidity in these regions to raise the natural frequency of the moment of inertia of area and reduce the road noise (refer to Patent Document 2).

CITATION LIST

Patent Documents

Patent Document 1: JPH 9-207516 A. Patent Document 2: JP 2008-001248 A. Attention is also drawn to the disclosures of US2005/061413, EP1,356,956, JP2001-253208 and JP2007-216778.

SUMMARY OF INVENTION

(Technical Problem)

The inventor found that, while enhancing the circumferential rigidity of the end regions of the circumferential belt layer, the aforementioned method is not effective to reduce road noise in pneumatic tires having an inclined belt layer, of which the cords are significantly inclined relative to the circumferential direction of the tire, and a circumferential belt layer on the outside of the inclined belt in the radial direction.

Therefore, the present invention aims to provide a pneumatic tire having improved noise performance obtained while maintaining the steering stability performance and the rolling resistance performance.

(Solution to Problem)

The pneumatic tire according to the present invention is as claimed in claim 1.

The present invention makes it possible to provide a pneumatic tire having improved noise performance while maintaining the steering stability performance and the rolling resistance performance.

In the pneumatic tire according to the present invention, it is preferable that a width of the high-rigidity region, with a central focus on the tire equator, is not less than 0.2 times and not more than 0.6 times of a width of the tire circumferential belt.

Such a structure makes it possible to achieve further improvement in the noise performance.

In the pneumatic tire according to the present invention, it is preferable that the cords of at least one inclined belt layer are inclined relative to the circumferential direction of the tire at an angle of not less than 50° and not more than 90°.

Such a structure makes it possible to maintain the steering stability performance and the rolling resistance performance at high level.

In the present invention, the following techniques (1) to (2) are used so as to ensure that the circumferential rigidity in the high-rigidity region is higher than that of the remaining regions:

(1) The high-rigidity region of the circumferential belt has an increased number of circumferential belt layers in the radial direction of the tire as compared to the remaining region of the circumferential belt, and

(2) The high-rigidity region of the circumferential belt is formed by a circumferential belt layer which is divided in the width direction of the tire and overlapping the divided layers each other.

The sectional width SW of the tire and the external diameter OD of the tire satisfy the following condition (i):

$$OD \geq -0.0187 \times SW^2 + 9.15 \times SW - 380 \ldots\ldots\ldots (i)$$

Such a configuration makes it possible to highly improve the fuel efficiency, rolling resistance and air resistance of the tire.

The term "sectional width SW of the tire" as used herein is defined as the width obtained by subtracting the thickness of patterns or characters provided on the surface of the sidewalls from the total width defined by the direct distance between the surface of sidewalls which includes the thickness of those patterns and characters, when the tire is mounted on an application rim, filled with a prescribed air pressure, and under the condition of no load.

Further, the term "outer diameter OD of the tire" as used herein is defined as the outer diameter in the radial direction of the tire when the tire is mounting on an application rim, filled with air pressure, and is under the condition of no load. The aforementioned air pressure is the one corresponds to the maximum load capacity for the ply rating of the application size described in the standard which will be mentioned below.

(Advantageous Effect of Invention)

The present invention makes it possible to provide a pneumatic tire having improved noise performance while maintaining the steering stability performance and the rolling resistance performance by making the circumferential rigidity of the high-rigidity region of the circumferential belt higher than the circumferential rigidity of the remaining region.

BRIEF DESCRIPTION OF DRAWINGS

Fig. 1 is a sectional view, as seen in the tire width direction, showing the tire according to the first embodiment, which is not according to the present invention but which is useful for its understanding;
Fig.2 is a view for explaining the operation of the present invention;
Fig.3 is a sectional view, as seen in the tire width direction, showing the tire according to the second embodiment, which is in accordance with the present application;
Fig.4 is a sectional view, as seen in a tire width direction, showing the tire according to the third embodiment; which is not in accordance with the present invention but which is useful for its understanding;
Fig. 5 is a sectional view, as seen in the tire width direction, showing the tire according to the forth embodiment, which is not in accordance with the present invention but which is useful for its understanding;
Fig.6 is a sectional view, as seen in the tire width direction, showing the tire according to an embodiment, which is not in accordance with the present invention but which is useful for its understanding; and
Fig.7 is a view showing the relation between SW and OD in the Test Tires, Conventional Tires and Control Tires.

DESCRIPTION OF EMBODIMENTS

Now, explanation will be made of the tire of the present invention by way of example embodiments thereof.

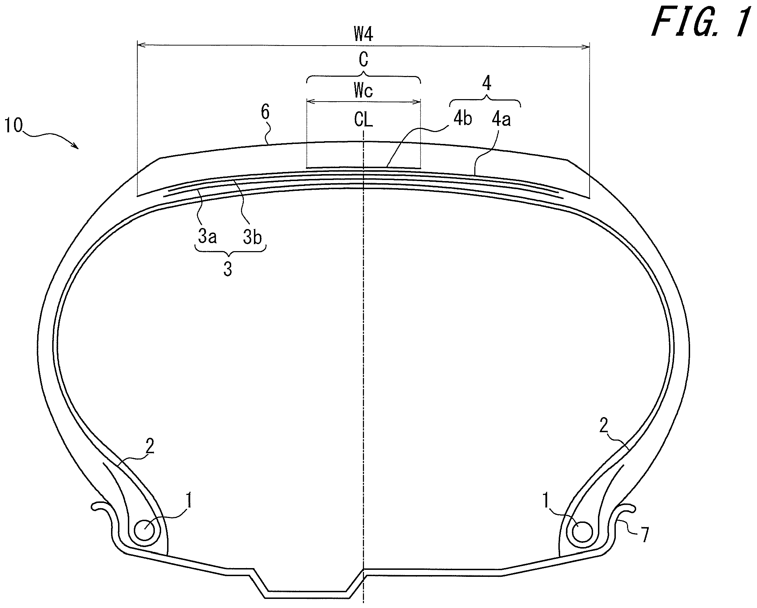

Fig.1 is a sectional view, as seen in the tire width direction, showing the tire according to the first embodiment which is not in accordance with the present invention but which is useful for its understanding.

The pneumatic tire 10 according to the first embodiment comprises bead cores 1 provided in the pair of the bead portions, a carcass 2 extending in a toroidal shape between the pair of the bead portion, a incline belt 3 which is disposed outside of the crown portion of the carcass in the radial direction of the tire and comprising two inclined belt layers 3a, 3b, a circumferential belt 4 which is disposed outside of the inclined belt 3 in the radial direction of the tire and comprises two circumferential belt layers 4a, 4b, and a tread 6 which is to be arranged at the outer side of the circumferential belt 4 in the radial direction of the tire. The pneumatic tire 10 is subjected to use in the state of being attached to an application rim 7. The application rim 7 is defined as the standard rim for the applied size regulated by industrial standards effective in the areas where the tire is manufactured or used, such as JATMA for Japan, ETRTO STANDARD MANUAL for Europe, TRA YEAR BOOK for the United States, and the like. The width W4 of the circumferential belt 4 or the like described below are measured when the pneumatic tire 10 is mounted on the application rim 7, inflated with the maximum pressure according to the tire size regulated in JATMA and the like, and under no load.

The inclined belt layers 3a, 3b have cords inclined not less than 35° and not more than 90° (preferably not less than 50° and not more than 90°) with respect to the circumferential direction of the tire, and the cords of the inclined belt layer 3a and that of the inclined belt layer 3b intersect across the tire equator CL.

If the inclination angle of the inclined belt layer 3a, 3b is less than 35°, a sufficient steering stability especially during the cornering cannot be obtained due to the reduced rigidity in the tire width direction, or the rolling resistance performance would be deteriorated due to increased shear deformation of the rubber layers. If the inclination angle of the inclined belt layer 3a, 3b is not less than 50°, the steering stability and the rolling resistance performance would be maintained at high level.

The circumferential belt layers 4a, 4b have cords extending along the circumferential direction of the tire. As sued herein, the term "cords extending along the tire circumferential direction of the tire" includes not only the condition where the cords are parallel to the circumferential direction of the tire, but also the condition where the cords are slightly inclined relative to the circumferential direction of the tire (including about 5°) due to spiral winding of the strips made by rubber-coated cords.

The circumferential belt 4 is disposed so as to cover the inclined belt 3. That is, the width W4 of the circumferential belt layer 4a having the maximum width among the circumferential belt layers is larger than that of the inclined belt layer 3a having maximum width among the inclined belt layers. As mentioned above, it is preferable that the width W4 of the circumferential belt layer 4a having the maximum width among the circumferential belt layers is larger than that of the inclined belt layer 3a having maximum width among the inclined belt layers, and the edge of the circumferential belt layer 4a and the edge of the inclined belt layer 3a is apart not less than 5 mm in order to suppress the separation of the belt edge. However, it is possible, even when the width W4 of the circumferential belt layer is shorter than that of the inclined belt layer 3a, to simultaneously achieve all the effects of the steering stability performance, rolling resistance performance, and the noise performance.

The cords of the carcass 2, inclined belt 3 and circumferential belt 4 may be comprised, for example, of organic fiber cords including aramid-, polyethylene terephthalate-, or polyethylene naphthalate-cords, or steel cords.

The tire circumferential rigidity per unit width at any location in the high-rigidity region C of the circumferential belt 4, which includes the tire equator CL, is higher than the tire circumferential rigidity per unit width any location in the remaining region of the circumferential belt 4. In the first embodiment, the circumferential rigidity of the high-rigidity region C is comparatively higher than the remaining region because two circumferential belt layers 4a, 4b are disposed at the high-rigidity region C, while only one circumferential belt layer 4a is disposed over the remaining region. Here, the tire circumferential rigidity per unit width among the other regions is constant over the tire width direction.

Further, when the number of belt layers in the high-rigidity region C is different from that of the remaining region, the rigidity of the tread 6 over the tire width direction does not change continuously from the high-rigidity region to the remaining regions but changes only at the boundary between them.

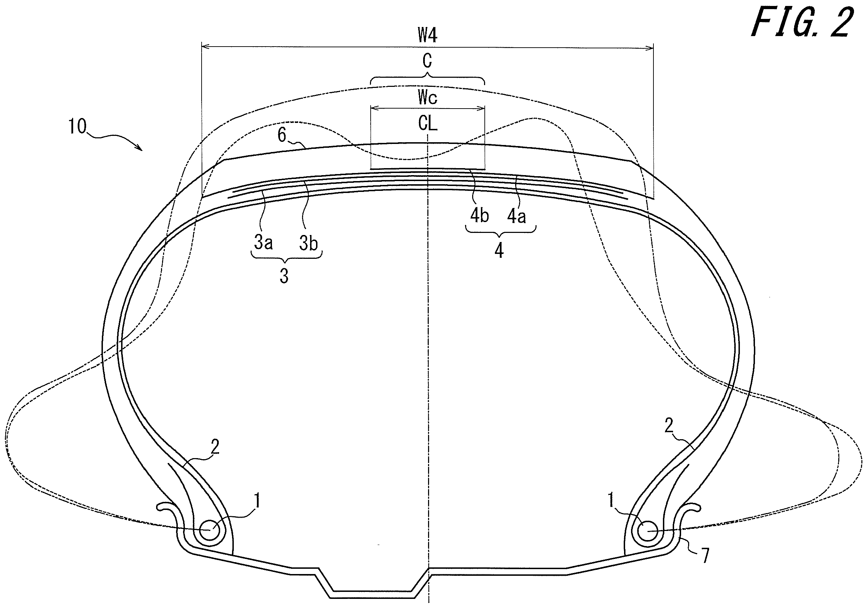

Here, as regards tires including an inclined belt layer, wherein the cords are inclined within the scope of the present invention, i.e., at an angle not less than 35° and not more than 90°, many of such tires have a shape as indicated by the double-dotted line in Fig.2, wherein the tread surface uniformly undergoes a significant vibration in the high frequency range of 400 Hz to 2 kHz under such vibration mode in the cross-sectional direction as the primary, secondary or ternary vibration mode, thereby causing a large noise emission. Therefore, by locally increasing the circumferential rigidity of the central portion of the tread in the tire width direction, it is possible to reduce sound radiation, and suppress the expansion of the tread surface in the circumferential direction of the tire (indicated with the dashed line in Fig.2). However, when the rigidity of the central portion of the tread is excessively increased, where the rigidity is comparatively high, the effect of decreasing the noise emission is reduced because the tread is uniformly vibrated easily.

Further, the locally increasing the rigidity of the region includes tire equator CL makes the local shear strain larger and then the attenuation of the vibration mode is also increased. As in the present invention, improvements to change the rigidity so as to increase the rigidity corresponds to the increase of the ring rigidity of the tire and the suppression of the eccentricity of the tire, therefore the rolling resistance performance of the tire cannot be deteriorated easily.

As mentioned above, in the present embodiment, it is possible to improve the noise performance which becomes an issue when the cord of the inclined belt layers 3a, 3b are largely inclined with respect to the tire circumferential direction of the tire and then the circumferential belt is provided to achieve both steer stability performance and rolling resistance performance.

The width Wc of the high-rigidity region C, with a central focus on the tire equator, is not less than 0.2 times and not more than 0.6, that is, it is preferable to satisfies the condition: $0.2 \times W4 \leq Wc \leq 0.6 \times W4$. According to the first embodiment, the width Wc of the high-rigidity region C is equal to the width of the circumferential belt layer 4b.

If $Wc < 0.2 \times W4$, the width Wc of the high-rigidity region C is too small to obtain the sufficient effect to improve the noise performance. On the other hand, if $0.6 \times W4 < Wc$, the width Wc of the high-rigidity region C is too large and it is not possible to obtain the sufficient effect to improve the noise performance due to the mode in which the entire tread vibrates is more likely induced and it is also to be a issue of the deterioration of rolling resistance performance due to the increase of the tire weight.

In the case of plural of circumferential belt layers are disposed, the W4 is defined by the width of the widest circumferential belt layer.

A further embodiment, which is according to the present invention will be explained below.

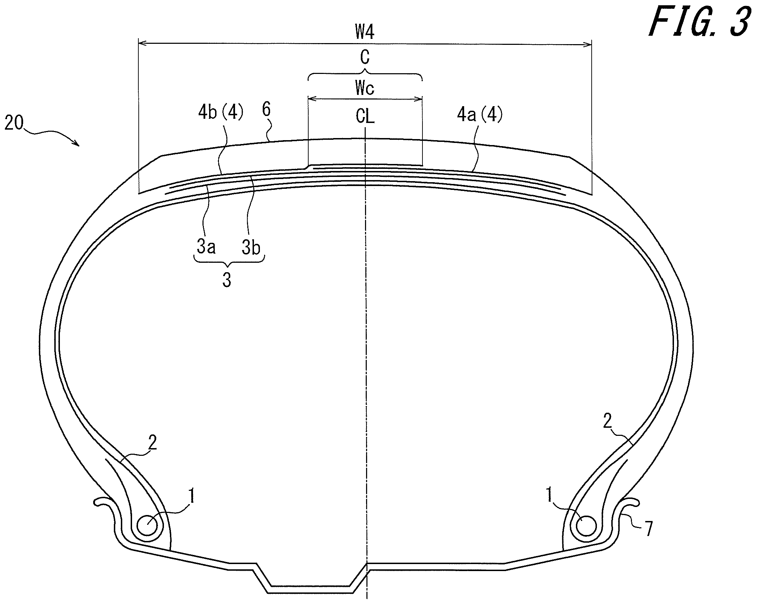

Fig.3 shows a sectional view, as seen in the tire width direction, showing the tire according to the second embodiment, which is according to the present invention. The explanation of the identical components as the first embodiment will be omitted with the same reference numerals.

In the pneumatic tire 20 according to the second embodiment, the circumferential belt layer 4a, 4b are divided in the tire width direction. In the high-rigidity region C, the circumferential belt layers 4a and 4b are overlapped in the tire radial direction of the tire, the circumferential belt layer 4a is disposed inside and the circumferential belt layer 4b is disposed outside.

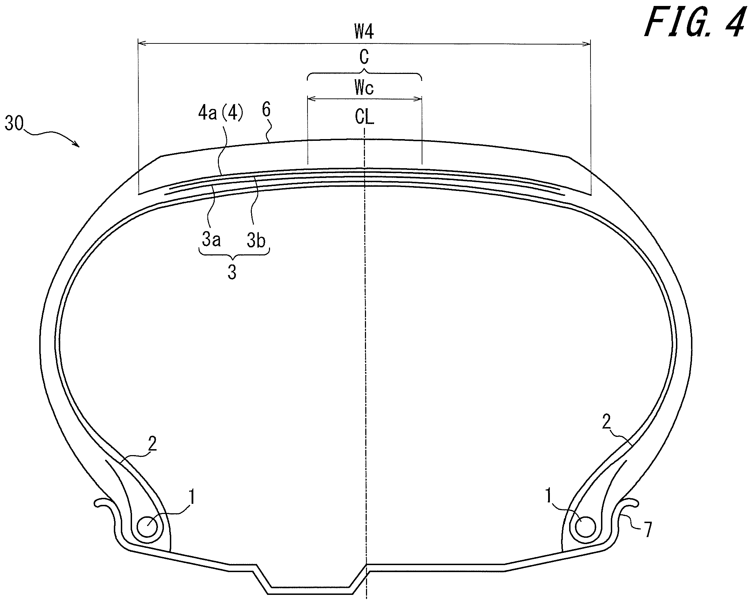

Fig.4 is a sectional view, as seen in the tire width direction, showing the tire according to the third embodiment. The explanation of the identical components as the above embodiments will be omitted with the same reference numerals.

In the pneumatic tire 30 according to the third embodiment, the circumferential belt 4 is configured by one circumferential belt layer 4a. In such a case, the rigidity of the cord consists of the circumferential belt layer 4a of the high-rigidity region is higher than that in other regions.

Here, the cord consists of the circumferential belt layer 4a is made by, for example, organic fiber cords including aramid, polyethylene terephthalate or polyethylene naphthalate cords, or steel cords. The rigidity of the high-rigidity region is enhanced by locally increasing the number of implantation or twists of the cord.

Further, at the boundary between the high-rigidity region C and the other regions, the belt layers can be continuously disposed over the both regions, of which the rigidity is different from each other, by allowing an overlap or a gap of about 5mm of the code of the belt layer and that of the other belt layer.

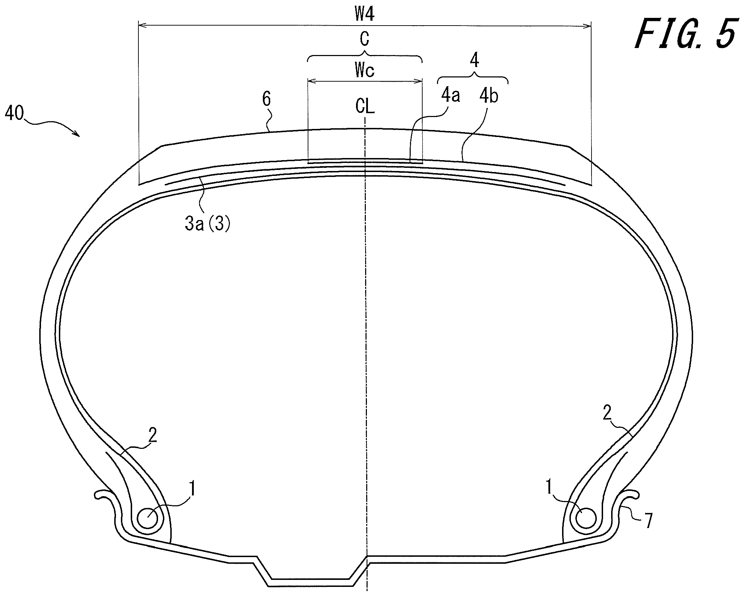

Fig.5 is a sectional view, as seen in the tire width direction, showing the tire according to the forth embodiment. In this forth embodiment, the explanation of the identical components as the above embodiments will be omitted with the same reference numerals.

In the pneumatic tire 40 according to the forth embodiment, the inclined belt 3 is configured by only one inclined belt layer 3a. Compared with the aforementioned embodiments, it is possible to suppress deterioration of the rolling resistance of tire by reducing the number of belt layers and cutting off the tire weight.

Further, in this embodiment, the circumferential belt layer 4a having smaller width is arranged radially inward and the circumferential belt layer 4b having larger width is arranged radially outward.

Moreover, although not shown, the circumferential belt 4 may be arranged inside of the inclined belt 3 as another embodiment. In this way, the number of the inclined belt layers and circumferential belt layers and the arrangement of the radial direction of the tire cannot be limited to the examples shown in the drawings.

As further embodiments, it is possible to adopt the configuration that the rigidity in the other region per unit width increases toward the high-rigidity region C, for example, the rigidity is gradually or stepwisely reduced from inside towards outside of the other regions in the tire width direction.

The cords of the inclined belt layers 3a, 3b may be inclined at relatively small angle between not less than 10° and not more than 30° in the high-rigidity region C and at relatively large angle between not less than 50° and not more than 90° in the regions other than the high-rigidity region may be inclined.

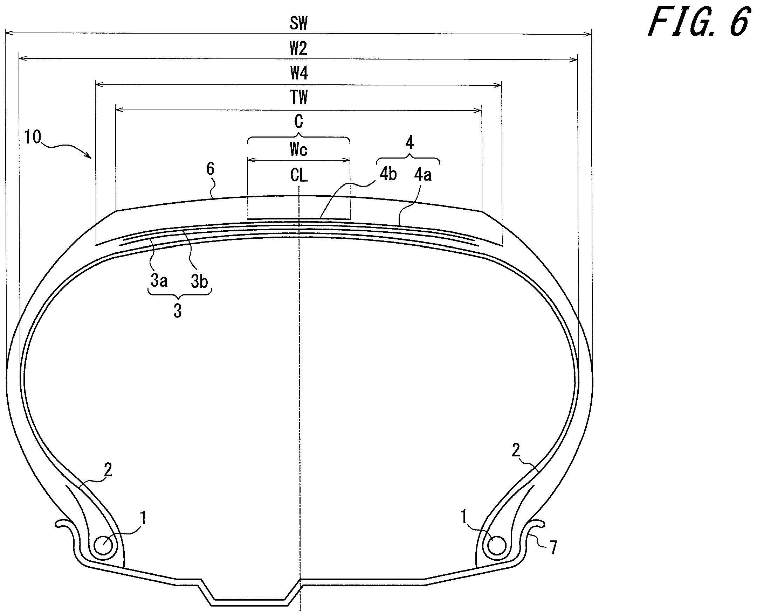

For the inclined belt 3 described above, with reference to Fig.6, it is preferable that an widest inclined belt layer (inclined belt layer 3 a in Fig.6) among the inclined belt layers configuring the inclined belt 3 extends not less than 60 % of the maximum width W2 of the carcass 2 for increasing the durability of the tire. Further, it is preferable that the widest inclined belt layer 3a is wider than the contact width TW of the tread for further increasing the durability of the tire.

Moreover, the belt structure according to the present invention is adopted the pneumatic tire wherein the sectional width SW and the outer diameter OD satisfy the following condition:

$$OD \geq -0.0187 \ \times \ SW^2 + 9.15 \ \times \ SW - 380 \ \ldots\ldots\ldots (i)$$

That is, the tire which satisfies the condition (i), in which the outer diameter OD of the tire is enlarged relative to the tire section width SW compared to conventional tires (enlarged diameter and narrowed width), enables to reducing the rolling resistance value (RR value) which reducing the air resistance value (Cd value) due to unlikely to be affected by the roughness of the road surface. Further, the load capacity of the tire is also increased by enlarging the diameter.

As mentioned above, it is possible to improve fuel efficiency from the point of view of rolling resistance and air resistance of the tire by satisfying the condition (i).

Further, it is possible for the tire, which satisfies the condition (i), to secure a room for a trunk space or an installation space because the position of the wheel axle is higher and then the room under the floor is enlarged.

The condition (i) has been developed by focusing attention on the relationship between the sectional width SW and the outer diameter OD of the tire, mounting tires of various sizes (including non-standard sizes) on the vehicle, testing to measure the air resistance value (Cd value), the rolling resistance value (RR value), the interior comfort and the actual fuel consumption, and then determining the condition in which the those properties are superior to the prior art.

Test has been conducted to ascertain result the optimal condition of SW and OD, the results of which are explained below in detail.

First of all, Control Tire 1 of the size 195/65R15 was prepared, which is used in a vehicle of general purpose and is suitable for comparison of tire performance. Also, Control Tire 2 of the size 225/45R17 was prepared having the as an inch-up version of Control Tire 1. Further, tires of various sized were prepared (Test Tires 1 through 43). These tires were mounted onto the rim to conduct the following tests.

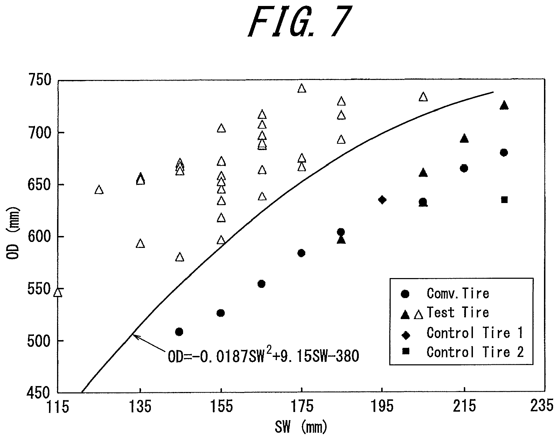

The specification of each tire is shown in Table A and Fig.7. The internal structure of those tires are same as typical tire in that each tire comprises a carcass extending between a pair of bead portions, and carcass plys consisting of radially arranged cords.

It is noted that the inventor took into account not only tires of a size compatible with such conventional standards as JATMA for Japan, TRA for the United States, ETRTO for Europe, but also tires of non-standard sizes.

[Table A-1]

|  | Tire Size | SW (mm) | OD (mm) | Inner Pressure (kPa) | Condition (i) |
|---|---|---|---|---|---|
| Conv. Tire 1 | 145/70R12 | 145 | 507.8 | 295 | Not Satisfied |
| Conv. Tire 2 | 155/55R14 | 155 | 526.1 | 275 | Not Satisfied |
| Conv. Tire 3 | 165/60R14 | 165 | 553.6 | 260 | Not Satisfied |
| Conv. Tire 4 | 175/65R14 | 175 | 583.1 | 245 | Not Satisfied |
| Conv. Tire 5 | 185/60R15 | 185 | 603 | 230 | Not Satisfied |
| Conv. Tire 6 | 205/55R16 | 205 | 631.9 | 220 | Not Satisfied |
| Conv. Tire 7 | 215/60R16 | 215 | 664.4 | 220 | Not Satisfied |
| Conv. Tire 8 | 225/55R17 | 225 | 679.3 | 220 | Not Satisfied |
| Conv. Tire 9 | 245/45R18 | 245 | 677.7 | 220 | Not Satisfied |
| Cont. Tire 1 | 195/65R15 | 195 | 634.5 | 220 | --- |
| Cont. Tire 2 | 225/45R17 | 225 | 634.3 | 220 | --- |
| Test Tire 1 | 155/55R21 | 155 | 704.5 | 220 | Satisfied |
| Test Tire 2 | 165/55R21 | 165 | 717.4 | 220 | Satisfied |
| Test Tire 3 | 155/55R19 | 155 | 653.1 | 220 | Satisfied |
| Test Tire 4 | 155/70R17 | 155 | 645.8 | 220 | Satisfied |
| Test Tire 5 | 165/55R20 | 165 | 689.5 | 220 | Satisfied |
| Test Tire 6 | 165/65R19 | 165 | 697.1 | 220 | Satisfied |
| Test Tire 7 | 165/70R18 | 165 | 687.5 | 220 | Satisfied |
| Test Tire 8 | 185/50R16 | 185 | 596.8 | 220 | Not Satisfied |
| Test Tire 9 | 205/60R16 | 205 | 661.3 | 220 | Not Satisfied |
| Test Tire 10 | 215/60R17 | 215 | 693.5 | 220 | Not Satisfied |
| Test Tire 11 | 225/65R17 | 225 | 725.8 | 220 | Not Satisfied |
| Test Tire 12 | 155/45R21 | 155 | 672.9 | 220 | Satisfied |
| Test Tire 13 | 205/55R16 | 205 | 631.9 | 220 | Not Satisfied |
| Test Tire 14 | 165/65R19 | 165 | 697.1 | 260 | Satisfied |
| Test Tire 15 | 155/65R18 | 155 | 658.7 | 275 | Satisfied |

[Table A-2]

|  |  | Tire Size | SW(mm) | OD(mm) | Inner Pressure (kPa) | Condition (i) |
|---|---|---|---|---|---|---|
|  | Test Tire 16 | 145/65R19 | 145 | 671.1 | 295 | Satisfied |
|  | Test Tire 17 | 135/65R19 | 135 | 658.1 | 315 | Satisfied |
|  | Test Tire 18 | 125/65R19 | 125 | 645.1 | 340 | Satisfied |
|  | Test Tire 19 | 175/55R22 | 175 | 751.3 | 345 | Satisfied |
|  | Test Tire 20 | 165/55R20 | 165 | 689.5 | 260 | Satisfied |
|  | Test Tire 21 | 155/55R19 | 155 | 653.1 | 275 | Satisfied |
|  | Test Tire 22 | 145/55R20 | 145 | 667.5 | 290 | Satisfied |
|  | Test Tire 23 | 135/55R20 | 135 | 656.5 | 310 | Satisfied |
|  | Test Tire 24 | 125/55R20 | 125 | 645.5 | 340 | Satisfied |
|  | Test Tire 25 | 175/45R23 | 175 | 741.7 | 250 | Satisfied |
|  | Test Tire 26 | 165/45R22 | 165 | 707.3 | 255 | Satisfied |
|  | Test Tire 27 | 155/45R21 | 155 | 672.9 | 270 | Satisfied |
|  | Test Tire 28 | 145/45R21 | 145 | 663.9 | 290 | Satisfied |
|  | Test Tire 29 | 135/45R21 | 135 | 654.9 | 310 | Satisfied |
|  | Test Tire 30 | 145/60R16 | 145 | 580.4 | 290 | Satisfied |
|  | Test Tire 31 | 155/60R17 | 155 | 617.8 | 270 | Satisfied |
|  | Test Tire 32 | 165/55R19 | 165 | 664.1 | 255 | Satisfied |
|  | Test Tire 33 | 155/45R18 | 155 | 596.7 | 270 | Satisfied |
|  | Test Tire 34 | 165/55R18 | 165 | 638.7 | 255 | Satisfied |
|  | Test Tire 35 | 175/55R19 | 175 | 675.1 | 250 | Satisfied |
|  | Test Tire 36 | 115/50RI7 | 115 | 546.8 | 350 | Satisfied |
|  | Test Tire 37 | 105/50R16 | 105 | 511.4 | 350 | Satisfied |
|  | Test Tire 38 | 135/60R17 | 135 | 593.8 | 300 | Satisfied |
|  | Test Tire 39 | 185/60R20 | 185 | 730 | 270 | Satisfied |
|  | Test Tire 40 | 185/50R20 | 185 | 693.0 | 270 | Satisfied |
|  | Test Tire 41 | 175/60R18 | 175 | 667.2 | 286 | Satisfied |
|  | Test Tire 42 | 185/45R22 | 185 | 716.3 | 285 | Satisfied |
|  | Test Tire 43 | 155/65R13 | 155 | 634.3 | 220 | Satisfied |

< Air Resistance Value >

In the laboratory, each tire was mounted on the application rims, filled with the internal pressure as shown in Table A, attached to a vehicle with an engine displacement of 1500 cc, before measuring the air force with a floor-standing balance while blowing air at a speed corresponding to 100 km/h.

< Rolling Resistance Value >

Each test tire was mounted on the application rims and inflated with an internal pressure as in set forth in Table 2. Then the maximum load defined for each vehicle, to which the tire is mounted, was applied. The rolling resistance of the tire was measured under the condition that the drum rotation speed was 100km/h.

Here, the term "maximum load defined for each vehicle" means the load which is applied to the tire receiving the highest load among the four tires assuming the maxim number of occupants.

Next, the following test was carried out to evaluate the actual fuel efficiency and inner comfort of the vehicle for the test tires 1 through 14.

< Actual Fuel Efficiency >

Test was conducted in a running JOC 8 mode. The evaluation results are represented as indices with the evaluation result of the Control Tire 1 set as 100, and the larger index means the better actual fuel efficiency.

< Inner Comfort >

Measured the width of a rear trunk when the tires were mounted to an vehicle of 1.7 m in width. The evaluation results are represented as indices with the evaluation result of the Control Tire 1 set as 100, and the larger index means the better inner comfort.

In Fig.7, the diamond mark indicates the Control Tire 1 and the square mark indicates the Control Tire 2, the white triangle mark indicates tires superior to the Control Tires means in the rolling resistance value, air resistance value, inner comfort, and actual fuel efficiency, and the black marks indicates tires inferior to the Control Tires in respect of any of these properties.

Further, the detailed test results are shown in Table B below.

[Table B-1]

| | RR Value (Index) | Cd Value (Index) | Actual Fuel Consumption (Index) | Interior Comfort (Index) |
|---|---|---|---|---|
| Conv. Tire 1 | 108 | 94 | --- | --- |
| Conv. Tire 2 | 111.3 | 91 | --- | --- |
| Conv. Tire 3 | 108.6 | 93 | --- | --- |
| Conv. Tire 4 | 103.6 | 101 | --- | --- |
| Conv. Tire 5 | 103.9 | 98 | --- | --- |
| Conv. Tire 6 | 101 | 102 | --- | --- |
| Conv. Tire 7 | 93 | 104 | --- | --- |
| Conv. Tire 8 | 85 | 106 | --- | --- |
| Conv. Tire 9 | 80 | 111 | --- | --- |
| Cont. Tire 1 | 100 | 100 | 100 | 100 |
| Cont. Tire 2 | 83 | 106 | --- | --- |
| Test Tire 1 | 60 | 90 | 117 | 105 |
| Test Tire 2 | 55 | 94 | 119 | 104 |
| Test Tire 3 | 90 | 90 | 105 | 105 |
| Test Tire 4 | 85 | 95 | 107 | 105 |
| Test Tire 5 | 72 | 97 | 112 | 104 |
| Test Tire 6 | 65 | 97 | 114 | 104 |
| Test Tire 7 | 61 | 98 | 116 | 104 |
| Test Tire 8 | 108 | 97 | 97 | 101 |
| Test Tire 9 | 98 | 102 | 101 | 99 |
| Test Tire 10 | 91 | 103 | 103 | 98 |
| Test Tire 11 | 85 | 105 | 106 | 97 |
| Test Tire 12 | 70 | 90 | 116 | 105 |
| Test Tire 13 | 99 | 102 | 99 | 99 |
| Test Tire 14 | 92.2 | 98 | --- | --- |

(continued)

|  | RR Value (Index) | Cd Value (Index) | Actual Fuel Consumption (Index) | Interior Comfort (Index) |
|---|---|---|---|---|
| Test Tire 15 | 96 | 91 | --- | --- |

[Table B-2]

|  | RR Value (INDEX) | Cd Value (INDEX) | Actual Fuel Consumption (INDEX) | Interior Comfort (INDEX) |
|---|---|---|---|---|
| Test Tire 16 | 92.4 | 89 | - | - |
| Test Tire 17 | 91.6 | 87 | - | - |
| Test Tire 18 | 88.2 | 85 | - | - |
| Test Tire 19 | 84.8 | 96 | - | - |
| Test Tire 20 | 92.6 | 93 | - | - |
| Test Tire 21 | 96.2 | 91 | - | - |
| Test Tire 22 | 92.3 | 89 | - | - |
| Test Tire 23 | 92.4 | 87 | - | - |
| Test Tire 24 | 87.7 | 85 | - | - |
| Test Tire 25 | 85.5 | 96 | - | - |
| Test Tire 26 | 89.7 | 93 | - | - |
| Test Tire 27 | 93.2 | 91 | - | - |
| Test Tire 28 | 92.2 | 89 | - | - |
| Test Tire 29 | 92.1 | 87 | - | - |
| Test Tire 30 | 93.9 | 89 | - | - |
| Test Tire 31 | 92.1 | 91 | - | - |
| Test Tire 32 | 89.4 | 93 | - | - |
| Test Tire 33 | 92.1 | 91 | - | - |
| Test Tire 34 | 89.4 | 93 | - | - |
| Test Tire 35 | 88.7 | 96 | - | - |
| Test Tire 36 | 86.7 | 83 | - | - |
| Test Tire 37 | 94.1 | 80 | - | - |
| Test Tire 38 | 85.6 | 87 | - | - |
| Test Tire 39 | 73.0 | 98 | - | - |
| Test Tire 40 | 80.0 | 98 | - | - |
| Test Tire 41 | 84.7 | 96 | - | - |
| Test Tire 42 | 86.7 | 98 | - | - |
| Test Tire 43 | 90 | 91 | - | - |

Moreover, in the pneumatic tires which satisfy the relational expression (i) above, it is possible to improve steering stability as turning if the cord angle, with respect to the circumferential direction of the tire, of the inclined belt layer is not less than 70°, for example, so as to increase cornering power.

Furthermore, it is also possible to efficiently reduce road noise of the tire so as to improve noise performance if the belt structure is applied to a pneumatic tire which satisfies the above relational expression (i).

Example 1

Example 1 is not according to the present invention but useful to understand it. Example 1 will be explained below. There were produced Tires 1-1 through 1-14, Comparative Tires 1-1 through 1-4, and Conventional Tire 1 (size: 225/45R17) according to the specification shown in Table 1, to evaluate the steering stability, rolling resistance performance and noise performance.

Tire 1 has the belt structure shown in Fig.1, the ratio Wc/W4 of 0.28, which is the ratio of the width Wc of the high-rigidity region C to the width W4 of the circumferential belt layer 4a, and the cord angle with respect to the tire equator of the inclined belt layer 3 a, 3b is 60°.

Conventional Tire 1 has the same structure as the Invention Tire 1-1, except that the Conventional Tire 1 does not have the circumferential belt layer 4b, and further the cord angle with respect to the tire equator of the inclined belts 3a, 3b of 25°.

Comparative Tire 1-1 has the same structure as the Invention Tire 1-1 except that the Comparative Tire 1-1 does not have the circumferential belt layer 4b.

Comparative Tire 1-2 has the same structure as Tire 1-1 except that the circumferential belt layer 4b is same in width as the circumferential belt layer 4a.

Tires 1-2 through 1-7 have the same structure except that the ratio Wc/W4 was changed.

The Tires 1-8, 1-9, 1-13, 1-14 and Comparative Tires 1-3, 1-4 have the same structure as Tire 1-1 except that the cord angle with respect to the tire circumferential direction of the inclined belt layer was changed.

Tire 1-10 has the belt structure shown in Fig.3.

Tire 1-11 has the belt structure shown in Fig.4.

Tire 1-12 has the belt structure shown in Fig.5.

< Evaluation of Steering Stability >

Each test tire was mounted on the application rim and inflated by air pressure corresponding to the maximum load capacity of the tires, before carrying out the cornering power test for small steering angle which is one of the basic performance tests to evaluate the cornering power by.

First, the test tires were subjected to preparatory running at a speed of 30 km/h while urging the tire at the tread surface against the rotating belt having a flat belt for making the tread surface flat. Subsequently, the test tires were subjected to running in a state of adjusted to the above air pressure once again at the same speed, and continuously angling (providing a slip angle) up to the maximum of $\pm 1°$ between the tire rolling direction and the circumferential direction of the drum so as to measure the value of the cornering power (CP) corresponding to the positive and negative angles with an angular interval of 0.1°. A linear fitting for the steering angle with respect to PC value was performed, and the steering stability was evaluated regarding the measure of steepness as the cornering stiffness. The results are represented as indices with the evaluation result of the Conventional Tire set as 100, and the larger index means the better steering stability performance.

< Evaluation of Rolling Resistance Performance >

Each test tire was mounted to the application rims 7 and inflated with an inner pressure of 180kPa, to measure the rolling resistance of the axle by using a drum test machine having an iron plate surface of 1.7m diameter. This measurement of the rolling resistance was conducted as a smooth drum, force-type measurement in compliance with ISO18164. The results are indicated in a percentage of its deterioration in comparison with the rolling resistance performance of the Comparative Tire 1. Deterioration within 6% is not considered as a significant difference.

< Evaluation of Noise Performance >

Each test tire was mounted to the application rims 7 and inflated with an inner pressure of 180kPa, to measure the noise level using a microphone travel method by rotating the tires at the speed of 40km/h, 60km/h, 80km/h, 100km/h while applying the load of 4.52N on a running test drum. Then the average of these measurements was calculated. The results show that the smaller index means the better performance.

[Table 1]

| | Comp.1-1 | Comp.1-2 | .1-1 | .1-2 | .1-3 |
|---|---|---|---|---|---|
| Wc/W4 | --- | 1 | 0.28 | 0.35 | 0.5 |
| Cord Angle of Inclined Belt Layer | 60° | 60° | 60° | 60° | 60° |
| Steering stability | 100 | 105 | 100 | 100 | 101 |
| Noise Performance | 0dB | -1.2dB | 2.9dB | 3.2dB | 1.7dB |
| Rolling Resistance Performance | 100 | 100 | 102 | 103 | 106 |

| | .1-4 | .1-5 | .1-6 | .1-7 |
|---|---|---|---|---|
| Wc/W4 | 0.2 | 0.6 | 0.15 | 0.65 |
| Cord Angle of Inclined Belt Layer | 60° | 60° | 60° | 60° |
| Steering stability | 100 | 102 | 100 | 102 |
| Noise Performance | 1.0dB | 1.2dB | 0.2dB | 0.3dB |
| Rolling Resistance Performance | -101 | 106 | 101 | 105 |

| | .1-8 | .1-9 | Comp.1-3 | Comp.1-4 | Conv. 1 |
|---|---|---|---|---|---|
| Wc/W4 | 0.28 | 0.28 | 0.28 | 0.28 | --- |
| Cord Angle of Inclined Belt Layer | 35° | 90° | 30° | 25° | 25° |
| Steering stability | 99 | 106 | 96 | 92 | 90 |
| Noise Performance | 3.0dB | 0.6dB | 3.1dB | 3.5dB | 3.7dB |
| Rolling Resistance Performance | 106 | 100 | 110 | 114 | 104 |

| | .1-10 | .1-11 | .1-12 | .1-13 | .1-14 |
|---|---|---|---|---|---|
| Wc/W4 | 0.28 | 0.28 | 0.28 | 0.28 | 0.28 |
| Cord Angle of Inclined Belt Layer | 60° | 55° | 60° | 45° | 50° |
| Steering stability | 100 | 100 | 100 | 99 | 100 |
| Noise Performance | 2.9dB | 2.9dB | 2.9dB | 2.7dB | 1.9dB |
| Rolling Resistance Performance | 102 | 103 | 102 | 106 | 102 |

From Table 1, it is obvious that the noise performance of the Invention Example Tire was improved, in comparison with the Comparative Tires, while the steering stability performance and rolling resistance performance were maintained.

Among the four rows of Table 1, the first and second rows show the comparison results obtained by increasing the width of the high-rigidity region C. The effect of noise performance cannot be expected when the high-rigidity region C has a width smaller than the lower limit (not less than 0.2 times and not more than 0.6 times of the circumferential belt width) set out in the present invention, because it is not possible to encourage the change in the shape of vibration mode. Further, the effect of noise performance is reduced when the width of the high-rigidity region C is larger than the upper limit set out in the present invention. The reason is that the belt layers of the high-rigidity region C constrain the amplitude around the shoulder portion and it changes the mode shape of the amplitude in which the entire tread are vibrated.

Moreover, the third and fourth rows of Table 1 show the results obtained by changing the belt angles. It can be confirmed that steering stability performance and rolling resistance performance were both decreased when the belt angle with respect to the circumferential direction of the tire is within the range of the present invention (mot less than 35° and not more than 90°).

Example 2

The Example 2 is not according to the present invention but useful to understand it. Example 2 will be explained below. Experimentally produced Tire 2, Comparative Tires 2-1, 2-2, and Conventional Tire 2 according to the specifications shown in Table 1, and evaluated steering stability, rolling resistance performance, wear resistance, and noise performance.

Tire 2 has the belt structure shown in Fig.1, the sectional width SW of the tire is 155mm, the outer diameter of the tire is 704.5mm, the ratio Wc/W4, in detail the ratio of the width Wc of the high-rigidity region C to the width W4 of the circumferential belt layer 4a, is 0.28, and the cord angle with respect to the tire circumferential direction of the inclined belt layer 3a, 3b is 70°.

Comparative Tire 2-2 has the same structure as the Tire 2 except that the Comparative Tire 2-2 does not have the circumferential belt layer 4b.

Comparative Tire 2-1 has the same structure as Tire 1-1 except that the Comparative Tire 2-1 does not have the circumferential belt layer 4b and the cord angle with respect to the tire circumferential direction of the inclined belt layer 3a, 3b is 30°.

Conventional Tire 2 has the same structure as the Tire 2,
except that the Conventional Tire 2 does not comprise the circumferential belt layer 4b, and the sectional width SW of the tire is 195 mm, the outer diameter of the tire is 634.5 mm, and the cord angle with respect to the tire circumferential direction of the inclined belt 3a, 3b is 30°. That is, Conventional Tire 2 has wider width and smaller diameter than Invention Tire 2 and Comparative Tire 2-1, 2-2.

< Evaluation of Steering Stability Performance >

The steering stability performance of each test tire was evaluated in the same manner as Example 1. The results are represented in Table 2 as indices with the evaluation result of the Conventional Tire 2 set as 100, and the larger index means the better performance.

< Evaluation of Rolling Resistance Performance >

The rolling resistance performance of each test tire was evaluated in the same manner as Example 1. The results are represented in Table 2 as indices with the value of rolling resistance of the Conventional Tire 2 set as 100, and the smaller index means the better performance.

< Evaluation of Wear Resistance Performance >

Each test tire was mounted on a drum test machine specified in JIS D4230, and the wear resistance performance was evaluated by measuring and comparing the wear volume of a shoulder portion of a tire tread after traveling the tires for 10000 km at a constant speed under the load of 4 kN. The results are represented in Table 2 as indices with the wear volume in the tread shoulder region of the Conventional Tire 2 set as 100, and the smaller index means the better performance.

< Evaluation of Noise Performance >

Noise performance of each test tire was evaluated in the same manner as Examples 1. The results are represented in Table 2 as indices with the noise reduction effect of the Conventional Tire 2 set as 100, and the smaller index means the better performance.

[Table 2]

|  | Conv.2 | Comp.2-1 | Comp.2-2 | .2 |
|---|---|---|---|---|
| Tire Size | 195/65R15 | 155/55R21 | | |
| SW(mm) | 195 | 155 | 155 | 155 |
| OD(mm) | 634.5 | 704.5 | 704.5 | 704.5 |
| Condition (i) | Not Satisfied | Satisfied | Satisfied | Satisfied |
| Wc/W4 | --- | --- | --- | 0.28 |

(continued)

|  | Conv.2 | Comp.2-1 | Comp.2-2 | .2 |
|---|---|---|---|---|
| Cord Angle of Inclined Belt Layer | 30° | 30° | 70° | 70° |
| Steering stability Performance | 100 | 98 | 105 | 105 |
| Rolling Resistance Performance | 100 | 60 | 50 | 53 |
| Anti-Wear Performance | 100 | 108 | 96 | 94 |
| Noise Performance |  | 100 | 108 | 102 |

Table 2 shows that the rolling resistance is reduced in the tire 2, while the anti-wear performance, noise performance and steering stability performance are well maintained in comparison with the comparative tires conventional tires.

Reference Signs

| | |
|---|---|
| 1 | bead core |
| 2 | Carcass |
| 3a, 3b | Inclined belt layer |
| 3 | Inclined belt |
| 4a, 4b | Circumferential belt layer |
| 4 | Circumferential belt |
| 6 | Tread |
| 7 | Application rim |
| 10, 20, 30, 40 | Pneumatic tire |
| CL | Tire equator |
| C | High-rigidity region |
| TW | Contact width of tread |
| SW | Sectional width of tire |

**Claims**

1.   A pneumatic tire (10,20,30,40) comprising a pair of bead portions provided with bead cores (1), a carcass (2) extending in a toroidal shape between the pair of the bead portions, an inclined belt (3) disposed on a radially outer side of a crown of the carcass and comprising at least one inclined belt layer (3a,3b) having cords inclined relative to a tire circumferential direction at an angle in the range of 35° to 90°, a circumferential belt (4) disposed on the radially outer side of the crown of the carcass and comprising at least one circumferential belt layer (4a,4b) having cords extending in the tire circumferential direction, and a tread (6) which is disposed on the outside of the circumferential belt in the radial direction of the tire, wherein:

    - the circumferential belt comprises high-rigidity region (C) including a tire equator (CL)and having a circumferential rigidity per unit width which, at any location in that region, is higher than that at any location in remaining regions of the circumferential belt;
    - the circumferential rigidity per unit width in the remaining regions is constant in the tire width direction or increases toward the high-rigidity region;

    the high-rigidity region of the circumferential belt has an increased number of circumferential belt layers in the tire radial direction compared to the remaining regions of the circumferential belt; and
    the high-rigidity region of the circumferential belt is formed by circumferential belt layers which are divided in the width direction of the tire and overlapped each other, **characterized in that**:

    the tire has a sectional width SW [mm] and an outer diameter OD [mm], which satisfy the following condition:

$$OD \geq -0.0187 \ \times \ SW^2 + 9.15 \ \times \ SW - 380.$$

2. The pneumatic tire according to claim 1, **characterized in that** the high-rigidity region has a center on the tire equator, and a width in a range of 0.2 times to 0.6 times of a width of the tire circumferential belt.

3. The pneumatic tire according to claim 1 or 2, **characterized in that** the cords of at least one inclined belt layer are inclined relative to the circumferential direction of the tire at an angle in a range of 50° to 90°.

4. The pneumatic tire according to any one of claims 1 to 3, **characterized in that** an outermost edge of the circumferential belt (4) is located outside of an outermost edge of the inclined belt (3) in the tire width direction.

5. The pneumatic tire according to any one of claims 1 to 4, **characterized in that** the circumferential rigidity in the remaining regions per unit width is gradually reduced from inside towards outside of the remaining regions in the tire width direction.

6. The pneumatic tire according to any one of claims 1 to 4, **characterized in that** the circumferential rigidity in the remaining regions per unit width is stepwisely reduced from inside towards outside of the remaining regions in the tire width direction.

7. The pneumatic tire according to any one of claims 1 to 6, **characterized in that** a widest inclined belt layer (3a) among the at least one inclined belt layer (3a, 3b) extends not less than 60% of the maximum width W2 of the carcass.

8. The pneumatic tire according to any one of claims 1 to 7, **characterized in that** an application rim diameter is not less than 18 inch.

9. The pneumatic tire according to any one of claims 1 to 8, **characterized in that** an aspect ratio is not less than 50%.

10. The pneumatic tire according to any one of claims 1 to 9, **characterized in that** the inclined belt (3) comprises two inclined belt layers (3a, 3b).

11. The pneumatic tire according to any one of claims 1 to 10, **characterized in that** the inclined belt (3) is arranged only inside of the circumferential belt (4) in the radial direction.

12. The pneumatic tire according to any one of claims 1 to 10, **characterized in that** the circumferential belt (4) is arranged inside of the inclined belt (3) in the radial direction.

**Patentansprüche**

1. Luftreifen (10, 20, 30, 40), der ein Paar von Wulstabschnitten, die mit Wulstkernen (1) versehen sind, eine Karkasse (2), die sich in einer kreisringförmigen Gestalt zwischen dem Paar von Wulstabschnitten erstreckt, einen geneigten Gürtel (3), der auf einer in Radialrichtung äußeren Seite eines Scheitels der Karkasse angeordnet ist und wenigstens eine geneigte Gürtellage (3a, 3b) umfasst, die Kords hat, die im Verhältnis zu einer Reifenumfangsrichtung in einem Winkel in dem Bereich von 35° bis 90° geneigt sind, einen umlaufenden Gürtel (4), der auf der in Radialrichtung äußeren Seite des Scheitels der Karkasse angeordnet ist und wenigstens eine umlaufende Gürtellage (4a, 4b) umfasst, die Kords hat, die sich in der Reifenumfangsrichtung erstrecken, und eine Lauffläche (6), die auf der Außenseite des umlaufenden Gürtels in der Radialrichtung des Reifens angeordnet ist, umfasst, wobei:

    - der umlaufende Gürtel einen Bereich (C) hoher Steifigkeit umfasst, der einen Reifenäquator (CL) einschließt und eine umlaufende Steifigkeit je Breiteneinheit hat, die, an einer beliebigen Position in diesem Bereich, höher ist als an einer beliebigen Position in verbleibenden Bereichen des umlaufenden Gürtels,
    - die umlaufende Steifigkeit je Breiteneinheit in den verbleibenden Bereichen in der Reifenbreitenrichtung konstant ist oder zu dem Bereich hoher Steifigkeit hin zunimmt,

der Bereich hoher Steifigkeit des umlaufenden Gürtels eine gesteigerte Anzahl von umlaufenden Gürtellagen in der Reifenradialrichtung, verglichen mit den verbleibenden Bereichen des umlaufenden Gürtels, hat und
der Bereich hoher Steifigkeit des umlaufenden Gürtels durch umlaufende Gürtellagen gebildet wird, die in der Breiterichtung des Reifens geteilt und miteinander überlappt sind, **dadurch gekennzeichnet, dass**:

der Reifen eine Nennbreite SW [mm] und einen Außendurchmesser OD [mm] hat, welche die folgende Bedingung erfüllen:

$$OD \geq -0,0187 \times SW^2 + 9,15 \times SW - 380.$$

2. Luftreifen nach Anspruch 1, **dadurch gekennzeichnet, dass** der Bereich hoher Steifigkeit eine Mitte auf dem Reifenäquator hat und eine Breite in einem Bereich vom 0,2fachen bis zum 0,6fachen einer Breite des umlaufenden Gürtels hat.

3. Luftreifen nach Anspruch 1 oder 2, **dadurch gekennzeichnet, dass** die Kords wenigstens einer geneigten Gürtellage im Verhältnis zu der Umfangsrichtung des Reifens in einem Winkel in einem Bereich von 50° bis 90° geneigt sind.

4. Luftreifen nach einem der Ansprüche 1 bis 3, **dadurch gekennzeichnet, dass** eine äußerste Kante des umlaufenden Gürtels (4) außerhalb einer äußersten Kante des geneigten Gürtels (3) in der Reifenbreitenrichtung angeordnet ist.

5. Luftreifen nach einem der Ansprüche 1 bis 4, **dadurch gekennzeichnet, dass** die umlaufende Steifigkeit in den verbleibenden Bereichen je Breiteneinheit allmählich von der Innenseite zu der Außenseite der verbleibenden Bereiche hin in der Reifenbreitenrichtung verringert wird.

6. Luftreifen nach einem der Ansprüche 1 bis 4, **dadurch gekennzeichnet, dass** die umlaufende Steifigkeit in den verbleibenden Bereichen je Breiteneinheit schrittweise von der Innenseite zu der Außenseite der verbleibenden Bereiche hin in der Reifenbreitenrichtung verringert wird.

7. Luftreifen nach einem der Ansprüche 1 bis 6, **dadurch gekennzeichnet, dass** eine breiteste geneigte Gürtellage (3a) unter der wenigstens einen geneigten Gürtellage (3a, 3b) sich über nicht weniger als 60 % der maximalen Breite W2 der Karkasse erstreckt.

8. Luftreifen nach einem der Ansprüche 1 bis 7, **dadurch gekennzeichnet, dass** ein Anbringungsfelgendurchmesser nicht geringer als 18 Zoll ist.

9. Luftreifen nach einem der Ansprüche 1 bis 8, **dadurch gekennzeichnet, dass** ein Seitenverhältnis nicht geringer als 50 % ist.

10. Luftreifen nach einem der Ansprüche 1 bis 9, **dadurch gekennzeichnet, dass** der geneigte Gürtel (3) zwei geneigte Gürtellagen (3a, 3b) umfasst.

11. Luftreifen nach einem der Ansprüche 1 bis 10, **dadurch gekennzeichnet, dass** der geneigte Gürtel (3) nur innerhalb des umlaufenden Gürtels (4) in der Radialrichtung angeordnet ist.

12. Luftreifen nach einem der Ansprüche 1 bis 10, **dadurch gekennzeichnet, dass** der umlaufende Gürtel (4) innerhalb des geneigten Gürtels (3) in der Radialrichtung angeordnet ist.

**Revendications**

1. Pneumatique (10, 20, 30, 40) qui comprend une paire de parties de talon qui sont munies de tringles de talon (1), une carcasse (2) qui s'étend selon une forme toroïdale entre la paire des parties de talon, une ceinture inclinée (3) qui est disposée sur un côté radialement externe d'une partie supérieure de la carcasse et qui comprend au moins une couche de ceinture inclinée (3a, 3b) qui comporte des câbles qui sont inclinés par rapport à une direction circonférentielle du pneumatique selon un angle dans la plage de 35° à 90°, une ceinture circonférentielle (4) qui est disposée sur le côté radialement externe de la partie supérieure de la carcasse et qui comprend au moins une couche de ceinture circonférentielle (4a, 4b) qui comporte des câbles qui s'étendent dans la direction circonférentielle du pneumatique, et une bande de roulement (6) qui est disposée sur l'extérieur de la ceinture circonférentielle dans la direction radiale du pneumatique, dans lequel :

- la ceinture circonférentielle comprend une région de rigidité élevée (C) qui inclut un équateur de pneumatique (CL) et qui présente une rigidité circonférentielle par largeur unitaire qui, au niveau de n'importe quel emplacement dans cette région, est plus élevée que celle au niveau de n'importe quel emplacement dans des régions restantes de la ceinture circonférentielle ;
- la rigidité circonférentielle par largeur unitaire dans les régions restantes est constante dans la direction de largeur du pneumatique ou augmente en direction de la région de rigidité élevée ;

la région de rigidité élevée de la ceinture circonférentielle comporte un nombre augmenté de couches de ceinture circonférentielle dans la direction radiale du pneumatique par comparaison avec les régions restantes de la ceinture circonférentielle ; et

la région de rigidité élevée de la ceinture circonférentielle est formée par des couches de ceinture circonférentielle qui sont divisées dans la direction de largeur du pneumatique et qui se chevauchent les unes les autres, **caractérisé en ce que** :

le pneumatique présente une largeur en coupe SW [mm] et un diamètre externe OD [mm] qui satisfont la condition qui suit :

$$OD \geq -0{,}0187 \times SW^2 + 9{,}15 \times SW - 380.$$

2. Pneumatique selon la revendication 1, **caractérisé en ce que** la région de rigidité élevée comporte un centre sur l'équateur de pneumatique, et elle présente une largeur dans une plage de 0,2 fois à 0,6 fois une largeur de la ceinture circonférentielle de pneumatique.

3. Pneumatique selon la revendication 1 ou 2, **caractérisé en ce que** les câbles d'au moins une couche de ceinture inclinée sont inclinés par rapport à la direction circonférentielle du pneumatique selon un angle dans une plage de 50° à 90°.

4. Pneumatique selon l'une quelconque des revendications 1 à 3, **caractérisé en ce qu'**un bord le plus externe de la ceinture circonférentielle (4) est situé à l'extérieur d'un bord le plus externe de la ceinture inclinée (3) dans la direction de largeur du pneumatique.

5. Pneumatique selon l'une quelconque des revendications 1 à 4, **caractérisé en ce que** la rigidité circonférentielle dans les régions restantes par largeur unitaire est réduite de façon progressive depuis l'intérieur en direction de l'extérieur des régions restantes dans la direction de largeur du pneumatique.

6. Pneumatique selon l'une quelconque des revendications 1 à 4, **caractérisé en ce que** la rigidité circonférentielle dans les régions restantes par largeur unitaire est réduite par pas depuis l'intérieur en direction de l'extérieur des régions restantes dans la direction de largeur du pneumatique.

7. Pneumatique selon l'une quelconque des revendications 1 à 6, **caractérisé en ce qu'**une couche de ceinture inclinée la plus large (3a) parmi l'au moins une couche de ceinture inclinée (3a, 3b) s'étend sur pas moins de 60% de la largeur maximum W2 de la carcasse.

8. Pneumatique selon l'une quelconque des revendications 1 à 7, **caractérisé en ce qu'**un diamètre de jante d'application n'est pas inférieur à 18 pouces.

9. Pneumatique selon l'une quelconque des revendications 1 à 8, **caractérisé en ce qu'**un rapport d'aspect n'est pas inférieur à 50 %.

10. Pneumatique selon l'une quelconque des revendications 1 à 9, **caractérisé en ce que** la ceinture inclinée (3) comprend deux couches de ceinture inclinée (3a, 3b).

11. Pneumatique selon l'une quelconque des revendications 1 à 10, **caractérisé en ce que** la ceinture inclinée (3) est agencée seulement à l'intérieur de la ceinture circonférentielle (4) dans la direction radiale.

12. Pneumatique selon l'une quelconque des revendications 1 à 10, **caractérisé en ce que** la ceinture circonférentielle (4) est agencée à l'intérieur de la ceinture inclinée (3) dans la direction radiale.

FIG. 1

FIG. 2

EP 2 842 765 B1

*FIG. 3*

EP 2 842 765 B1

FIG. 4

EP 2 842 765 B1

*FIG. 5*

EP 2 842 765 B1

FIG. 6

EP 2 842 765 B1

## FIG. 7

$$OD=-0.0187SW^2+9.15SW-380$$

Legend:
- ● Conv. Tire
- ▲△ Test Tire
- ◆ Control Tire 1
- ■ Control Tire 2

OD (mm) vs SW (mm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9207516 A
- JP 2008001248 A
- US 2005061413 A
- EP 1356956 A
- JP 2001253208 A
- JP 2007216778 A